# EUROPEAN PATENT SPECIFICATION

(11) **EP 4 340 085 B1**
(45) Date of publication and mention of the grant of the patent: **10.09.2025**
(21) Application number: 22887526.6
(22) Date of filing: 24.10.2022
(51) Int. Cl.: B65H 45/101, H01M 10/04, B65H 31/26, B65H 29/24, B65H 31/10, H01M 10/0583

(54) **ELECTRODE ASSEMBLY FOLDING APPARATUS AND ELECTRODE ASSEMBLY FOLDING METHOD**
ELEKTRODENANORDNUNGSFALTVORRICHTUNG UND ELEKTRODENANORDNUNGSFALTVERFAHREN
APPAREIL DE PLIAGE D'ENSEMBLE D'ÉLECTRODES ET PROCÉDÉ DE PLIAGE D'ENSEMBLE D'ÉLECTRODES

(30) Priority: 26.10.2021 KR 20210143668; 20.10.2022 KR 20220135648
(43) Date of publication of application: 20.03.2024
(73) Proprietor: LG Energy Solution, Ltd., Seoul 07335 (KR)
(72) Inventor: KEUM, Dongyeon, Daejeon 34122 (KR); HWANG, Hong Ju, Daejeon 34122 (KR)
(74) Representative: Plasseraud IP
(86) International application number: PCT/KR2022/016252
(87) International publication number: WO 2023/075330

(56) References cited:
- EP-A1- 3 477 755
- CN-A- 111 430 773
- CN-A- 111 755 756
- CN-A- 112 117 495
- CN-A- 112 820 930
- KR-A- 20170 032 042
- KR-A- 20170 044 972
- KR-A- 20170 059 739
- KR-A- 20170 059 740

## Description

### [TECHNICAL FIELD]

The present disclosure relates to an electrode assembly folding apparatus and an electrode assembly folding method according to independent claims 1 and 13, respectively.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified based on the shape of a battery case into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet type positive electrodes and long sheet type negative electrodes are rolled with a separator being interposed between the positive electrode and the negative electrode, a stacked (laminated) type structure in which pluralities of positive electrodes and negative electrodes, cut into predetermined unit sizes, are sequentially stacked with separators being interposed between the positive electrodes and the negative electrodes, or the like. In recent years, in order to solve problems caused by the jelly-roll type electrode assembly and the stacked type electrode assembly, there has been developed a stacked/folding type electrode assembly, which is a combination of the jelly-roll type electrode assembly and the stacked type electrode assembly.

Meanwhile, in manufacturing a stacked type or stacked/folding type electrode assembly, conventionally, a method was used in which a plurality of bi-cells are manufactured by sequentially stacking a negative electrode, a separator, and a positive electrode, stacked or attached to a sheet-type separator, and then the sheet-type separator is folded in one direction. However, in such a conventional structure, since the bi-cell is manufactured in advance and then attached to the sheet-type separator and then stacked, the manufacturing procedure is complicated, and the sheet-type separator is overlapped in several layers on the side surface of the final battery cell, which caused a problem that an unnecessary gap space was generated between the electrode and the separator.

In addition, conventionally, a method of manufacturing an electrode assembly using a zigzag stacking method has been used in addition to the stacking method described above. The zigzag stacking method is a method of stacking electrode assemblies in which a positive electrode and a negative electrode are alternately supplied in the process where the separator unwound from the wound roll moves from one side to the other side and from the other side to one side. However, in the case of the zigzag stacking method, there is a problem that the cut electrodes must be separately stored, and there is a risk that the supplied electrodes will move during the stacking process. In addition, when manufacturing a battery cell with a long length, it is difficult to control a tension of the separator, and the progress speed is slow, resulting in a decrease in manufacturing efficiency.

Therefore, there is a need to develop a new folding apparatus and method that can simplify the process of the above-mentioned stacked type or stacked/folding type electrode assembly, thereby improving manufacturing efficiency and improving product durability and stability.

CN 112 820 930 and CN 111 755 756 disclose a laminating machine. CN 111 430 773 discloses a method for manufacturing electrode laminated assembly. EP 3 477 755 discloses a stacking device for secondary battery.

### [DETAILED DESCRIPTION OF THE INVENTION]

### [Technical Problem]

It is an object of the present disclosure to provide an electrode assembly folding apparatus that can simplify the conventional electrode assembly folding process, thereby improving manufacturing efficiency and product quality, and a method using the same.

### [Technical Solution]

According to one embodiment of the present disclosure, there is provided an electrode assembly folding apparatus for folding an electrode assembly in a zigzag shape, the apparatus comprising: a supply unit for supplying the electrode assembly that comprises two sheet-shape separators, a second electrode continuously located between inside surfaces of the separators facing each other, and a first electrode alternately located up and down on outside surfaces of the two separators, wherein a first unit body and a second unit body are alternately connected to each other, and wherein the first electrode of the first unit body is located at an upper side and the first electrode of the second unit body is located at a lower side, a holding unit that holds the first unit body supplied from the supply unit and transfers it through a swing motion, thereby folding the electrode assembly in a zigzag shape, and a stack unit that stacks the first unit body transferred by the holding unit.

The holding unit seats the transferred first unit body on the stack unit, then ascends and moves toward the supply unit, and then may descend to a position where it holds a subsequent first unit body.

The swing motion may be a motion in which the holding unit rotates in one direction so that one end facing the stack unit among both ends of the first unit body ascends and moves toward the stack unit, and then the holding unit rotates in a direction opposite to the one direction, so that the other end of both ends of the first unit body descends and moves toward the stack unit.

The holding unit moves from the supply unit toward the stack unit through the swinging motion between a first position and a second position, the first position may be a position where the first unit body is stacked on the stack unit, and the second position may be a position where the holding unit holds the first unit body supplied from the supply unit.

In a case that the supply unit is located on a left side and the stack unit is located on a right side, the one direction may be a counterclockwise direction, and the direction opposite to the one direction may be a clockwise direction.

In a case that the supply unit is located on a right side and the stack unit is located on a left side, the one direction may be a clockwise direction, and the direction opposite to the one direction may be a counterclockwise direction.

The holding unit comprises a first holding unit that transfers the k-th first unit body and a second holding unit that transfers the k+1 th first unit body, the k-th first unit body is stacked on the stack unit, and then the second holding unit holds the k+1-th first unit body, and k is a natural number.

The holding unit may be attached to an upper surface of the first electrode of the first unit body.

The holding unit may be a suction device using a gas suction method.

As the first unit body or the second unit body is stacked on the stack unit, the stack unit may be gradually descended by a height of the stacked first unit body or second unit body.

The electrode assembly folding apparatus may comprise a detection unit for detecting the position of the first unit body.

Based on the position information of the first unit body detected by the detection unit, at least one of the stack unit and the first unit body moves or rotates in a transfer direction of the electrode assembly or in a width direction of the electrode assembly, whereby the stack unit and the first unit body may be aligned with each other.

Based on the position information of the first unit body detected by the detection unit, at least one of the holding unit and the first unit body moves or rotates in a transfer direction of the electrode assembly or in a width direction of the electrode assembly, whereby the holding unit and the first unit body may be aligned with each other.

The detection unit comprises a first detection unit and a second detection unit, the first detection unit is located above a first position, the second detection unit is located above a second position, the first position may be a position where the first unit body is stacked in the stack unit, and the second position may be a position where the holding unit holds the first unit body.

According to another embodiment of the present disclosure, there is provided an electrode assembly folding method for folding an electrode assembly in a zigzag shape, the method comprising supplying the electrode assembly at a supply unit, wherein the electrode assembly comprises two sheet-shape separators, a second electrode continuously located between inside surfaces of the separators facing each other, and a first electrode alternately located up and down on outside surfaces of the two separators, and wherein a first unit body and a second unit body are alternately connected to each other, and wherein the first electrode of the first unit body is located at an upper side and the first electrode of the second unit body is located at a lower side, holding the first unit body supplied from the supply unit and transferring it through a swing motion, thereby folding the electrode assembly in a zigzag shape, and stacking the first unit body transferred by a holding unit, on a stack unit, wherein the holding unit seats the transferred first unit body on the stack unit, then ascends and moves toward the supply unit, and then descends to a position where it holds a subsequent first unit body.

The holding unit comprises a first holding unit that transfers the k-th first unit body and a second holding unit that transfers the k+1 th first unit body, the k-th first unit body is stacked on the stack unit, and then the second holding unit holds the k+1-th first unit body, and k may be a natural number.

The stack unit may move to a lower side again so that the transferred first unit body is stacked on the existing stack.

Before the step of stacking the first unit body, the method may further comprise: detecting position information of the first unit body by a detection unit, and adjusting the position of the stack unit or the holding unit based on the position information of the first unit body by the detection unit.

### [Advantageous Effects]

According to the embodiments, an electrode assembly folding apparatus of the present disclosure and a method using the same can apply a horizontal zigzag stacking method to prevent the electrode from moving during the stacking process, reduce the scale of the process equipment, and maximize the production speed of the electrode assembly.

### [BRIEF DESCRIPTION OF THE DRAWINGS]

Fig. 1 is a conceptual diagram showing a zigzag stacking method of an electrode assembly according to the present disclosure;
Fig. 2 is a side view of an electrode assembly folding apparatus according to one embodiment of the present disclosure;
Fig. 3 is a diagram showing the operation of the holding unit according to Fig. 2;
Fig. 4 is a diagram illustrating operations of a holding unit and a stack unit in an electrode assembly folding apparatus according to one embodiment of the present disclosure;
Figs. 5 and 6 are diagrams illustrating operations of a holding unit and a detection unit in the electrode assembly folding device according to one embodiment of the present disclosure;
Fig. 7 is a diagram showing one example of a holding unit included in Fig. 2;
Fig. 8 is a partially enlarged view of the holding unit shown in Fig. 7;
Fig. 9 is a cross-sectional view of the suction unit shown in Fig. 8;
Fig. 10 is a perspective view of the distal end shown in Fig. 7; and
Fig. 11 is a diagram showing another example of a holding unit included in Fig. 2.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described.

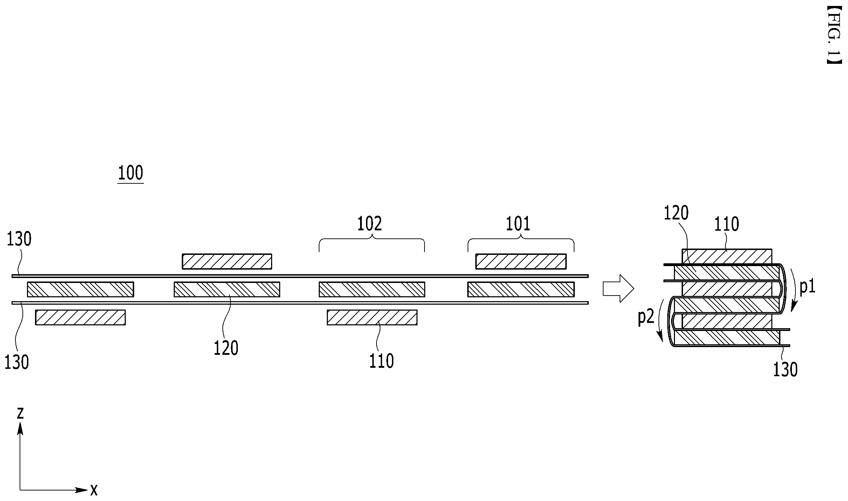

Fig. 1 is a conceptual diagram showing a zigzag stacking method of an electrode assembly according to the present disclosure.

In the present disclosure, an electrode assembly 100 used in the zigzag stacking method may be formed by stacking a long sheet-shape separator 130 and electrodes 110 and 120. The separator 130 may be provided as two long sheet-shape separators 130. The two separators 130 may be stacked with a plurality of second electrodes 120 being interposed between inside surfaces of the two separators 130 facing each other. The plurality of second electrodes 120 interposed between the separators 130 may be disposed at intervals from each other in the longitudinal direction (x-axis direction). Here, the first electrode 110 may be a positive electrode, and the second electrode 120 may be a negative electrode, but this is not necessarily the case.

A first electrode 110 may be located on an outside surface of each separator 130. At this time, the plurality of first electrodes 110 may be alternately located on the upper side (+z axis) or the lower side (-z axis) on the outside surfaces of the separators 130. The first electrodes 110 may be disposed to spaced apart from each other on the outside surface of each separator 130.

Here, the electrodes 110 and 120 and the separator 130 may be joined to each other. When the electrodes 110 and 120 are attached to the separator 130, not only can a strong electrode assembly 100 be formed, but also the shrinkage of the separator 130 can be prevented to further improve the safety of the battery. At this time, an adhesive material can also be used to join the electrodes 110 and 120 and the separator 130, or a joining method using heat and pressure such as lamination can be used.

The electrode assembly 100 may be described even in a form in which a plurality of unit bodies 101 and 102 are connected to each other. That is, the electrode assembly 100 used in the zigzag stacking method in the present disclosure can be described in a form in which a first unit body 101 in which the first electrode 110 is located in the upper side (+z-axis) direction and a second unit body 102 in which the first electrode 110 is located in the lower side (-z-axis) direction are alternately connected to each other.

Meanwhile, the electrode assembly 100 of the present embodiment can be folded by a zigzag stacking method from a sheet form in which the electrodes 110 and 120 are disposed on a long sheet-shape separator 130, thereby being manufactured in a stacked form. Hereinafter, for convenience of explanation, the 'stacked type electrode assembly 100' folded by the zigzag stacking method will be referred to as a 'stack 190'.

Specifically, the sheet-shape electrode assembly 100 can be manufactured as a stack 190 by folding the connection portions between the first unit body 101 and the second unit body 102 in opposite directions from each other. Here, the connection portion may be a portion in which no electrodes 110 and 120 are disposed in the electrode assembly 100 and only the separator 130 exists.

As shown in Fig. **1****,** a connection portion between the first unit body 101 and the second unit body 102 is folded to one side p1, and a connection portion between the second unit body 102 and the first unit body 101 adjacent thereto may be folded to the other side p2. Thereby, the separator 130 on the lower surface of the first unit body 101 can come into contact with the first electrode 110 on the lower surface of the second unit body 102, and the separator 130 on the upper surface of the second unit body 102 can come into contact with the first electrode 110 on the upper surface of the first unit body 101.

When the stack 190 is manufactured by such a folding process, the process of separately making individual bi-cells can be omitted, thereby manufacturing the stack 190 in a simpler and easier manner than in the prior art, and reducing battery manufacturing cost and time.

Next, an electrode assembly folding apparatus according to one embodiment of the present disclosure will be described. The electrode assembly folding apparatus of the present disclosure can achieve simplification of the manufacturing apparatus by implementing the zigzag stacking method in the horizontal direction, and can minimize damage to the electrode by using a holding unit using a suction method.

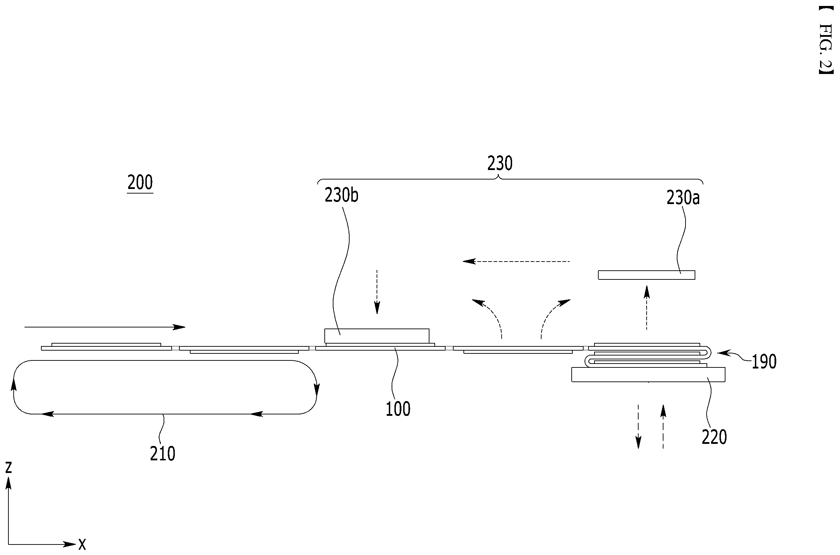

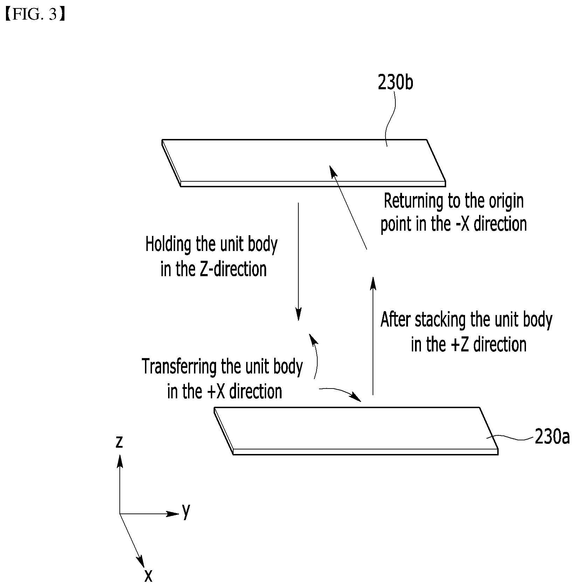

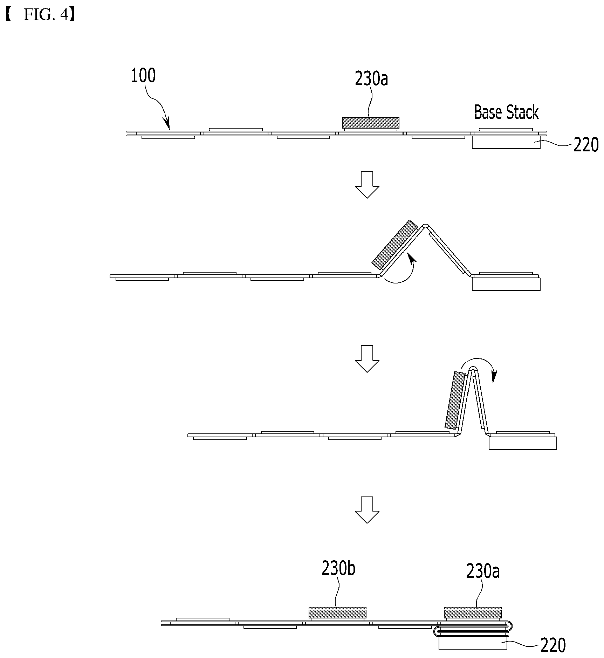

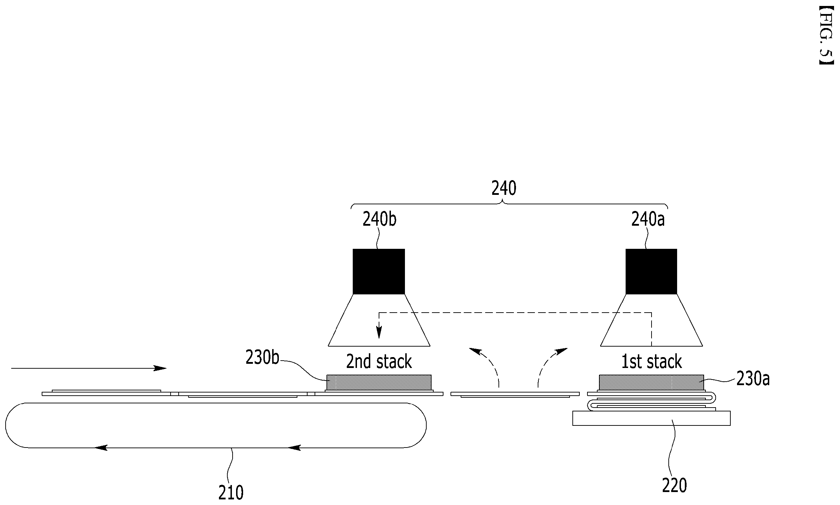

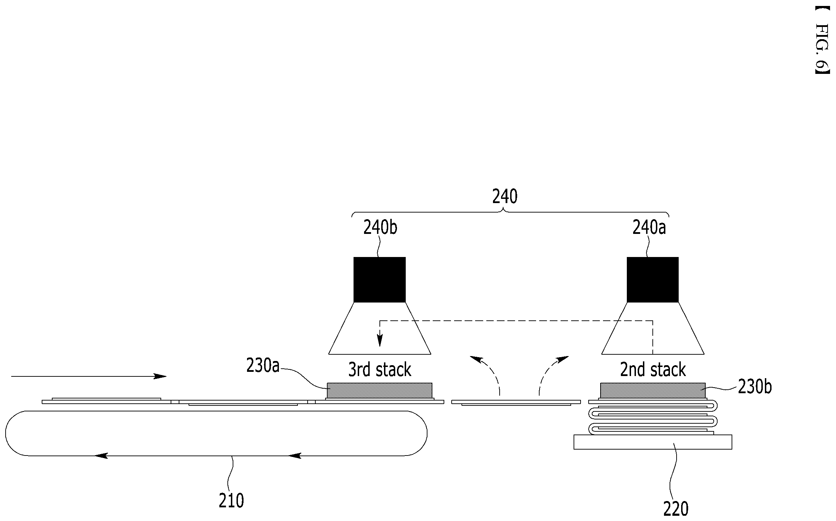

Fig. 2 is a side view of an electrode assembly folding apparatus according to one embodiment of the present disclosure. Fig. 3 is a diagram showing the operation of the holding unit according to Fig. 2. Fig. 4 is a diagram illustrating operations of a holding unit and a stack unit in an electrode assembly folding apparatus according to one embodiment of the present disclosure. Figs. 5 and 6 are diagrams illustrating operations of a holding unit and a detection unit in the electrode assembly folding device according to one embodiment of the present disclosure. In the electrode assembly 100 shown in the following figures, for convenience of understanding, in the electrode assembly 100 shown in Fig. **1****,** two separators 130 and a plurality of second electrodes 120 interposed between inside surfaces of two separators 130 facing each other are shown in simplified form. Meanwhile, the first electrode 110 located on the outside surface of the separator 130 is shown as it is.

Referring to Figs. 2 to 4, the electrode assembly folding apparatus 200 of the present embodiment may include a supply unit 210 for supplying a sheet-shape electrode assembly 100, a stack unit 220 on which the electrode assembly 100 folded in a zigzag shape is seated, and a holding unit 230 that holds a part of the electrode assembly 100 supplied from the supply unit 210 and moves it to the stack unit 220. Further, referring to Figs. 5 and 6, the electrode assembly folding apparatus 200 of the present embodiment may include a detection unit 240.

The supply unit 210 can move the electrode assembly 100 in an initial state, i.e., the sheet-shape electrode assembly 100, in one direction (x-axis direction). The supply unit 210 may be in the form of a conveyor. The supply unit 210 can continuously move along a prescribed track, thereby continuously moving the sheet-shape electrode assembly 100 in the direction in which the stack unit 220 is located.

The stack unit 220 supports the stack 190 folded in a zigzag and allows an additional first unit body 101 or a second unit body 102 to be stacked on the existing stack 190 through movement. The stack unit 220 may be in the form of a table or plate. The stack unit 220 may be further provided with a gripper (not shown) that fixes the stack 190. The gripper may have a mandrel structure, and for example, two to four grippers can be provided on each side of the stack unit 220 in the overall length direction (y-axis) of the stack 190. The stack unit 220 can mainly move up and down. More specifically, as the transferred first unit body 101 or second unit body 102 is stacked, the height of the stacked body 190 increases, so that the stack unit 220 can be descended by the height of the first unit body 101 or the second unit body 102 to be stacked. The stack unit 220 can also accurately move up and down or left and right so that the first unit body 101 or the second unit body 102 transferred by the holding unit 230 and the upper surface of the existing stack 190 placed on the stack unit 220 correspond to each other. At this time, the movement of the stack unit 220, that is, the position adjustment may be based on the position information transmitted from the detection unit 240.

The holding unit 230 may move the first unit body 101 or the second unit body 102 to the stack unit 220. In order to ensure that the sheet-shape electrode assembly 100 is folded in a zigzag shape, the holding unit 230 may move the first unit body 101, in which the first electrode 110 is placed on the upper surface, to the stack unit 220. The holding unit 230 may move the second unit body 102 in addition to the first unit body 101, but allowing the holding unit 230 to move the first unit body 101 will be mainly described below.

The holding unit 230 may move between a first position where the stack unit 220 is located, and a second position that is spaced apart from the first position, in which the first unit body 101 is located closest to the first position. The first position is a position where the first unit body 101 is stacked on an existing stack (i.e., previously stacked electrode assembly) in the stack unit 220, and the second position is a position where the holding unit 230 holds the first unit body 101 supplied from the supply unit 210. Here, the first position and the second position may be fixed positions, and specifically, may be a position defined based on a state before the first unit body 101 is held by the holding unit 230 and moved toward the stack unit 220. Further, here, the first position may be located farther from the second position in the transfer direction (x-axis direction) of the electrode assembly 100.

As shown in Figs. 2 and 3, the holding unit 230 descends to the second position (-z-axis direction) to hold the first unit body 101, and moves the first unit body 101 to the first position along the transfer direction (x-axis direction) of the electrode assembly 100. When the stacking of the first unit body 101 is completed, it may ascend from the first position (+z-axis direction), move in the opposite direction to the transfer direction (-x-axis direction), descend, and then return to the second position.

The holding unit 230 may circulate on a path including the first position and the second position. In the illustration of Fig. 2, the supply unit 210 is located on the left side of the figure and the stack unit 220 is located on the right side, and the holding unit 230 moves along a counterclockwise path. However, the present disclosure is not limited to those illustrated, and when the supply unit 210 and the stack unit 220 are provided symmetrically as shown in Fig. 2, they can be modified and changed to match with various environments in which the present disclosure is realized, such as being able to move along a clockwise path. It can move more precisely up and down or left and right so that the first unit body 101 or the second unit body 102 transferred by the holding unit 230 and the upper surface of the upper surface of the existing stack 190 placed on the stack unit 220 correspond to each other.

Meanwhile, when the holding unit 230 holds the first unit body 101 and moves it to the stack unit 220, the holding unit 230 can fold the first unit body 101 in a zigzag shape. Specifically, the holding unit 230 moves from the supply unit toward the stack unit through a swing motion between a first position and a second position.

The "swing motion" is defined as a motion in which the holding unit 230 rotates in one direction so that one end facing the stack unit 220 among both ends of the first unit body 101 ascends and moves toward the stack unit 220, and then the holding unit 230 rotates in a direction opposite to the one direction, so that the other end of both ends of the first unit body 101 descends and moves toward the stack unit 220.

In the embodiments of Figs. 2 to 4 in which the supply unit 210 is located on the left side of the figure and the stack unit 230 is located on the right side, for the swing motion of the holding unit 230, the holding unit 230 rotates in an counterclockwise by setting the width direction (y-axis direction) of the electrode assembly as an axis with respect to the horizontal plane (xy plane) to ascend the first unit body 101, and rotates in a clockwise direction to descend the first unit body 101, so that the electrode assembly 100 can be folded in a zigzag shape, that is, in a Z shape. However, the present disclosure is not limited to those illustrated, and when the supply unit 210 and the stack unit 220 are provided symmetrically as shown in Fig. 2, the holding unit 230 can be modified and changed to adapt to various environments in which the invention is embodied, such as rotating in a clockwise to ascend the first unit body 101, and rotating in a counterclockwise direction to descend the first unit body 101.

Here, the holding unit 230 may lift one end of the first unit body 101 and simultaneously move the first unit body 101 toward the stack unit 220 along the transfer direction (x-axis direction). Thereby, a portion between the first unit body 101 and the adjacent second unit body 102 can be folded, and the lower surface of the first unit body 101 and the lower surface of the second unit body 102 may correspond to each other. The holding unit 230 may lower one end of the lifted first unit body 101, whereby a portion between the second unit body 102 and the existing stack 190 is folded so that the upper surface of the second unit body 102 and the upper surface of the existing stack 190 correspond to each other, and the first unit body 101 and the second unit body 102 can be stacked on the existing stack 190. Here, one end is an end corresponding to the second unit body 102 adjacent to the first unit body 101, and the second unit body 102 may be located farther from the first unit body 101 in the transfer direction.

Through the swing motion of the holding unit 230, a portion between the second unit body 102 placing on the transfer direction (x-axis direction) of the first unit body 101 and the transferred first unit body 101 is folded to one side p1, and a portion between the second unit body 102 and the existing stack 190 is folded to the other side p2, so that the electrode assembly 100 can be folded in a zigzag shape.

At this time, as the first unit body 101 or the second unit body 102 is transferred and stacked on the stack unit 220, the height of the stack 190 increases. Thus, as described above, the stack unit 220 may be gradually descended by the height of the stacked first unit body 101 or the second unit body 102.

Meanwhile, the number of holding units 230 may be two or more. The holding unit 230 may include a first holding unit 230a and a second holding unit 230b. The first holding unit 230a transfers the k-th first unit body, the second holding unit 230b may transfer the k+1 th first unit body, and k is a natural number. As shown in Figs. 2 to 4, after the first holding unit 230a completes the movement of the first unit body 101 to the stack unit 220, the second holding unit 230b located at the second position may hold the first unit body 101 and move it to a first position, while moving from the first position to the second position (for example, immediately after ascending from the first position and immediately before moving in a direction opposite to the transfer direction of the first unit body 101). If two or more holding units 230 are provided in this way, the movement of the first unit body 101 to the stack unit 220 can be performed continuously. At this time, in order to ensure that a collision between the holding units 230 does not occur, it may be preferable that one of the holding units 230 completes the stacking of the first unit body 101, and then the other one holds the first unit body 101.

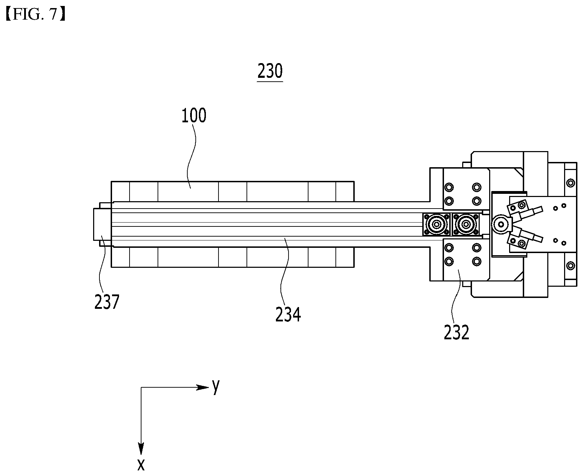

The holding unit 230 may use a suction function. A specific example of the holding unit 230 and its structure will be described later in detail with reference to Figs. 7 to 11.

The detection part 240 may be for aligning the first unit body 101 or the second unit body 102 at a constant position of the existing stack 190 during the stacking process of the electrode assembly 100. The detection part 240 may be for aligning the first unit body 101 and the holding part 230 or the stack part 220.

That is, based on the position information of the first unit body 101 detected by the detection unit 240, at least one of the stack unit 220 and the first unit body 101 moves or rotates in the transfer direction of the electrode assembly or in the width direction of the electrode assembly, so that the stack unit 220 and the first unit body 101 can be aligned with each other.

Further, based on the position information of the first unit body 101 detected by the detection unit 240, at least one of the holding unit 230 and the first unit body 101 moves or rotates in the transfer direction of the electrode assembly or in the width direction of the electrode assembly, whereby the holding unit 230 and the first unit body 101 can be aligned with each other. More specifically, the detection unit 240 may be for detecting the position of the holding unit 230 or the first unit body 101, which is the target of the holding unit 230. The detection unit 240 can detect the position of the holding unit 230 or the first unit body 101 before the holding unit 230 holds the first unit body 101, or after it holds the first unit body 101. Further, the detection unit 240 may detect the position of the stack unit 220, the holding unit 230, or the first unit body 101 before the first unit body 101 is stacked on the stack unit 220.

The detection unit 240 may be for detecting the position of a target based on the acquired image. The detection unit 240 may include a camera capable of image acquisition. The detection unit 240 may also be referred to as 'vision'. Further, the detection unit 240 of the present embodiment or the folding apparatus 200 of the present embodiment may include a control unit capable of data processing, and the control unit can detect position values of the first unit body 101, the stack unit 220, or the holding unit 230 from the image acquired by the detection unit 240. Further, the folding apparatus 200 may include a storage unit that stores the detected position value. Here, each position may be calculated as (x, y, θ) values. At this time, the θ value may represent an angle at which the first unit body 101 is inclined with respect to the xy plane. Here, the x-axis may be a transfer direction of the electrode assembly 100, and the y-axis may be a width direction of the electrode assembly 100.

Meanwhile, hereinafter, for convenience of explanation, the detection unit 240 'detecting' a position value or position information of a specific configuration will be described as including detecting a position value or position information through an arithmetic processing process of the control unit. That is, the detection unit 240 will be described as an example of a configuration including acquiring an image and calculating the position information of each configuration as (x, y, θ) values based on the image.

The position value and position information of the first unit body 101 confirmed by the detection unit 240 may be used to correct the position of the stack unit 220. The stack unit 220 and the detection unit 240 may be connected through wired/wireless network communication, or may be connected through input/output terminals and cables. Further, the stack unit 220 may include a control unit, and the position information can be processed through the control unit to adjust the position of the stack unit 220.

In one example, before the first unit body 101 is stacked on the stack unit 220, the position information of the first unit body 101 detected by the detection unit 240 can be transmitted to the stack unit 220. The detection unit 240 may detect the position information of the stack unit 220, and the transmitted position information of the first unit body 101 may be compared with the current position information of the stack unit 220. The stack unit 220 may be moved, or rotated on the xy plane based on position information of the first unit body 101, the stack unit 220, or the holding unit 230 from the detection unit 240. The stack unit 220 can be adjusted by moving in the x-axis or y-axis direction by the difference between the current position and the position of the first unit body 101, or by rotating by an inclined angle θ, so that the transferred first unit body 101 and the existing stack 190 correspond to each other. Here, the rotation may mean rotation with respect to the xy plane. Since the first unit body 101 displaced or inclined thereby is transferred to the adjusted stack unit 220, the first unit body 101 can be stacked so as to be aligned on an existing stack 190.

Further, the position information of the first unit body 101 confirmed by the detection unit 240 may be used to correct the position of the holding unit 230.

In one example, before the holding unit 230 holds the first unit body 101, position information of the first unit body 101 detected by the detection unit 240 may be transmitted to the holding unit 230. The transmitted position information of the first unit body 101 may be compared with position information of the holding unit 230. The holding unit 230 can be adjusted by moving in the x-axis or y-axis direction, or by rotating by an inclined angle θ, based on the compared value. Since the first unit body 101 displaced or inclined thereby is held by the adjusted holding unit 230, the first unit body 101 can be accurately held by the holding unit 230 at the second position. Here, the rotation for adjustment on the xy plane of the holding unit 230 is different from the rotation in the swing motion described above, and the rotation axis and direction may be different from each other. In this manner, not only the stack unit 220 but also the holding unit 230 can adjust the position based on the position information transmitted from the detection section 240. The holding unit 230 may be connected to the detection unit 240 through wired/wireless network communication, or may be connected through input/output terminals and cables. Further, the holding unit 230 may include a control unit, and the position information can be processed through the control unit to adjust the position of the holding unit 230 .

Meanwhile, here, calculating the difference between the position information of the two configurations and adjusting the position of the stack unit 220 or the holding unit 230 based on the difference value may be performed by a separate control unit. Here, the control unit may be included in the folding apparatus 200 of the electrode assembly or included in a host system of the folding apparatus 200. In order to receive or transmit the processing result of the control unit, the folding apparatus 200 or the hose system may include a communication unit.

Referring to Figs. 5 and 6, the number of the detection unit 240 may be two or more. The detection unit 240 may include a first detection unit 240a and a second detection unit 240b.

The detection unit 240 may acquire an image within a predetermined range at a fixed position. The first detection unit 240a may be located at the first position, and the second detection unit 240b may be located at the second position.

For example, in Fig. 5, the first detection unit 240a is used to detect position information of the 1st stacked first unit body 101 and the stack unit 220, and then in Fig. 6, it can be used to detect position information of the 2nd stacked first unit body 101 and the stack unit 220.

The first detection unit 240a can acquire the position value of a first unit body 101 moved by the holding unit 230 in the first position, a stack unit 220, or a first unit body 101 stacked on the stack unit 220. The first detection unit 240a detects the position value of the first unit body 101 stacked on the stack unit 220, and thus, can be used to confirm whether the stacked first unit body 101 is stacked side by side with the existing stack 190. Further, the first detection unit 240a can grasp the position values of the first unit body 101 and the stack unit 220 before the moved first unit body 101 is stacked, and this position value can be used to allow the first unit body 101 to be stacked side by side with the existing stack 190.

Further, in Fig. 5, the second detection unit 240b is used to detect position information of the 2nd stacked first unit body 101 and the holding unit 230, and then in Fig. 6, it can be used to detect position information of the 3rd stacked first unit body 101 and the holding unit 230.

The second detection unit 240b can acquire the position value of the holding unit 230, the first unit body 101 that is scheduled to be held or is previously held by the holding unit 230 at the first position. The second detection unit 240b may grasp the position value of the held first unit body 101, and such position values may be used to adjust the position of the stack unit 220. Here, the position value of the held first unit body 101 may be calculated based on a position value at which the holding unit 230 picks the first unit body 101. The position value of the first unit body 101 held in this way may be calculated as a relative value between the holding unit 230 and the first unit body 101. Further, the second detection unit 240b can grasp the position values of the holding unit 230 and the first unit body 101 before the holding unit 230 holds the first unit body 101, and such position values can be used to match them.

Next, the holding unit 230 of the present embodiment will be described in more detail.

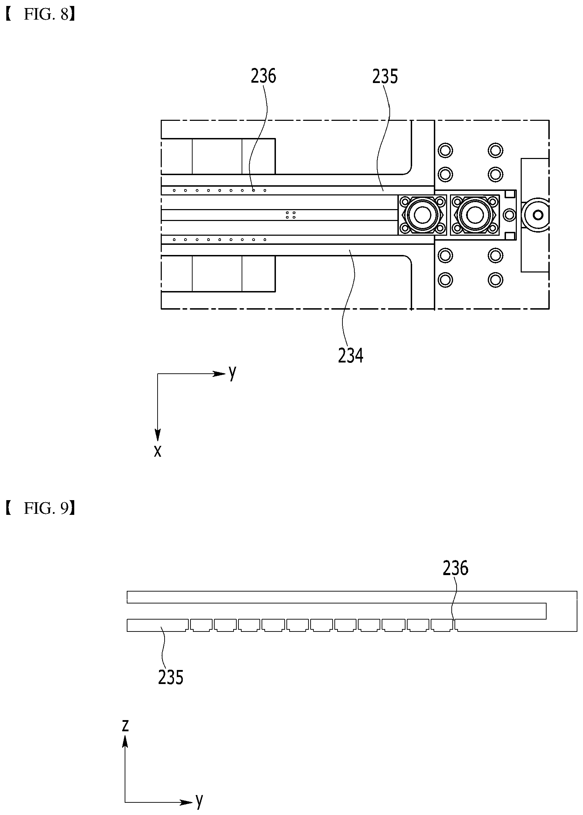

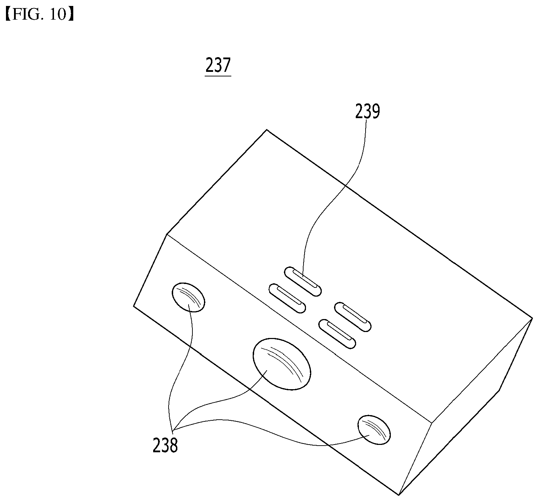

Fig. 7 is a diagram showing one example of a holding unit included in Fig. 2. Fig. 8 is a partially enlarged view of the holding unit shown in Fig. 7. Fig. 9 is a cross-sectional view of the suction unit shown in Fig. 8. Fig. 10 is a perspective view of the distal end shown in Fig. 7.

Referring to Fig. 7, the holding unit 230 of the present embodiment may be provided as a suction device to which a gas suction method is applied. The holding unit 230 may include a moving unit 232 that moves the holding unit 230, a suction unit 234 that temporarily attaches to the target by suctioning gas and lifts the target, and an end block 237 connected to the end of the suction unit 234.

Referring to Figs. 8 and 9, the suction unit 234 may include at least one or more suction lines 235 therein. The suction line 235 may be provided in the form of a tube having a circular, square or other cross-sectional shape. A plurality of suction lines 235 may be provided to cover a wider surface. For example, the suction lines 235 may be provided in three numbers. A plurality of suction holes 236 may be formed in the suction line 235 as shown in Fig. 9. The plurality of suction holes 236 may be disposed in a direction extending in the width direction (y-axis direction) of the first unit body 101 or the electrode assembly 100. When the suction unit 234 starts the suction function, external air flows into the suction unit 234, specifically into the suction line 235 through the suction hole 236, so that the target, that is, the first unit body 101 located on the lower side of the suction unit 234 can be attached to the suction unit 234. As the number of suction holes 236 increases, the performance of the suction unit 234 can be maximized. However, when there is a limit to the suction flow rate, a large number of suction holes 236 may rather deteriorate the suction performance.

Referring to Fig. 10, the block 237 is a portion connected to the end of the suction unit 234 and may be located at the end of the holding unit 230. The block 237 may include a block connection hole 238 connected to the suction line 235 and a block suction hole 239 for sucking gas similarly to the suction hole 236 of the suction line 235. When the block suction hole 239 is formed in the block 237, the end of the first unit body 101 and the suction unit 234 can be well attached, so that the holding and moving performance of the first unit body 101 can be further improved.

Meanwhile, Figs. 7 to 10 show an example of the holding unit 230, and the holding unit 230 of this embodiment may be provided in another form.

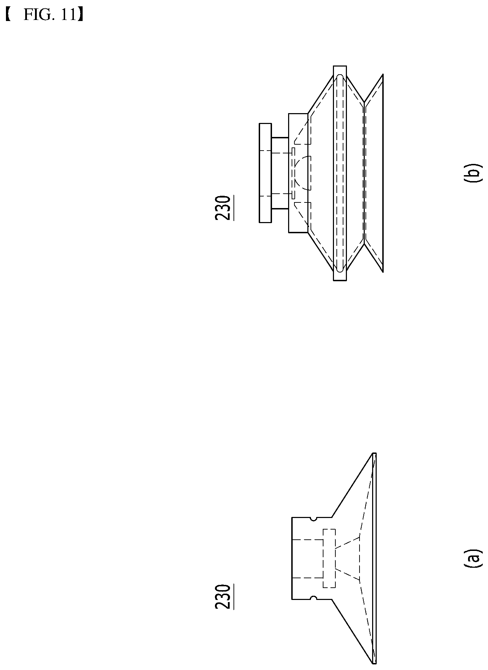

Fig. 11 is a diagram showing another example of a holding unit included in Fig. 2. Referring to Fig. 11, the holding unit 230 of the present embodiment is a suction device to which a gas suction method is applied, and may be provided as a bellow type suction cup. The bellow type holding unit 230 may suck gas through a suction hole opened to the lower side. The bellow type suction cup may be provided so that its cross section has a reverse tapered shape as shown in Fig. 11(a), and can also be provided with wrinkles on its circumferential surface as shown in Fig. 11(b), thereby coping with an external force and having a cushioning effect that minimizes damage to the target. One of the above-mentioned bellow type suction cups may be provided in the holding unit 230 as necessary, or a plurality of suction cups may be provided so as to cover a larger area.

In the above, when describing the holding unit 230, the holding unit 230 having a gas suction function has been mainly described. However, the holding unit 230 may be provided so as not to have a gas suction function, and in one example, the holding unit 230 may be provided in the form of a clamp or gripper that grips, fixes, and moves a target. However, since the electrode assembly 100 of the present embodiment is formed to be connected to a plurality of units 101 and 102, whereby when the holding unit 230 is used in a gripping manner, an unnecessary tension may be generated in the electrode assembly 100. In addition, when the holding unit 230 in the form of a clamp or gripper grips the unit bodies 101 and 102 and stacks them on the existing stack 190, a part of the holding unit 230 is located between the existing stack 190 and the unit bodies 101 and 102, so that the electrodes 110 and 120 or the separator 130 can be damaged during the process of removing the holding unit 230. In addition, the holding unit 230 of the present embodiment is attached to and released from the unit bodies 101 and 102 by ascending or descending in the z-axis direction, but in the case of the holding unit 230 in the form of a clamp or gripper, the unit bodies 101 and 102 are gripped and placed down by moving forward or backward in the y-axis direction toward the unit bodies 101 and 102, which causes a problem that the operation is slightly complicated and the operation time increases.

A method of folding the electrode assembly of the present embodiment will be described below. The folding method described below is an electrode assembly folding method using the electrode assembly folding apparatus 200 described above. Therefore, the folding method of the electrode assembly includes all the contents related to the folding apparatus 200 described above, and therefore, detailed descriptions of overlapping contents are omitted.

It should be noted in advance that the numerical numbers S1000 to S1500 shown in parentheses below are not shown in the figure, but are shown so that each step can be easily distinguished.

The electrode assembly manufacturing method (S1000) according to one embodiment of the present disclosure may include a step where the holding unit 230 holds the first unit body 101 of the electrode assembly 100 supplied by the supply unit 210 (S1100), a step where the holding unit 230 transfers the first unit body 101 toward the stack unit 220 (S1200), a step where the holding unit 230 folds the electrode assembly 100 through a swing motion so that the first unit body 101 overlaps with the adjacent second unit body 102 (S1300), and a step where the stack unit 220 moves to the lower side and the first unit body 101 transferred by the holding unit 230 is stacked on the stack 190 placing on the stack unit 220 (S1400).

In the step (S1100), the holding of the first unit body 101 may be performed by suctioning gas into the holding unit 230. For example, the step (S1100) may include a step where the holding unit 230 descends toward the first unit body 101 (S1110), a step where the suction function of the holding unit 230 is started to operate (S1120), a step where gas flows into the suction line 235 through the suction hole 236 of the holding unit 230 (S1130), and a step of attaching the holding unit 230 and the first unit body 101 (S1140).

At this time, the holding unit 230 may be located at the second position.

Meanwhile, the first unit body 101 held by the holding unit 230 is subsequently formed into a stack 190, wherein in order for the first unit body 101 to be stacked side by side on the stack 190, it may be preferable that the holding unit 230 always hold a specific position of the first unit body 101 in the step (S1100). Therefore, the present embodiment may further include a step of acquiring position information by the detection unit 240 in order to match the positions of the first unit body 101 and the holding unit 230. The detection unit 240 located above the second position used herein may be the second detection unit 240b.

For example, the detection unit 240 can detect the positions of the first unit body 101 and the holding unit 230 so that the positions of the first unit body 101 and the holding unit 230 correspond to each other before the holding unit 230 holds the first unit body 101.

In such a case, the step (S1100) may include a step where the detection unit 240 detects the position information of the first unit body 101 or the holding unit 230, and a step where, based on the position information by the detection unit 240, the position of the holding unit 230 is adjusted so that the positions of the first unit body 101 and the holding unit 230 correspond to each other. Further, before the step of adjusting the position of the holding unit 230, a step of comparing the position information of the first unit body 101 and the holding unit 230 may be further included.

The steps described above may be performed before the step where the holding unit 230 descends toward the first unit body 101 (S1110) or the step where the suction function of the holding unit 230 is started to operate (S1120).

On the other hand, due to the travelling characteristics of the first unit body 101, it may be difficult for the holding unit 230 to always hold a specific position of the first unit body 101. Therefore, after the holding unit 230 holds the first unit body 101, grasping the relative position information between the held first unit body 101 and the holding unit 230 and displacing the stack unit 220 based thereon may be desirable to form the stack 190 side by side. For example, the detection unit 240 may detect the position of the first unit body 101 or the holding unit 230 after the holding unit 230 holds the first unit body 101. Here, the detection unit 240 may detect a relative position between the first unit body 101 and the holding unit 230. The detection unit 240 may grasp the position of the first unit body 101 through the position of the holding unit 230. The detection unit 240 may calculate a position value at which the holding unit 230 picks the first unit body 101 and detect the position value of the first unit body 101 based thereon. For example, the detection unit 240 can check whether the holding unit 230 is coupled to the center of the first unit body 101 and whether it is coupled to the edge of the first unit body 101, thereby grasping the position information of the first unit body 101.

In such a case, the electrode assembly folding method (S1000) of the present embodiment may, after the step (S1100), further include a step where the detection unit 240 detects the position information of the holding unit 230 or the held first unit body 101. In addition, after the above step, the method may further include a step of transmitting the position information detected by the detection unit 240 to the stack unit 220.

The above step should not necessarily proceed immediately after the step (S1100), but should be performed within a range in which the position information can be detected by the detection unit 240.

Moreover, the electrode assembly folding method (S1000) of the present embodiment may include all of the steps of using the detection unit 240 to correspond the first unit body 101 and the holding unit 230 before the holding of the holding unit 230, or the steps of using the detection unit 240 to obtain positional information of the held first unit body 101 after holding the holding unit 230, and may include only one of these steps.

In the step (S1200), the holding unit 230 can move from the second position to the first position. The holding unit 230 may transfer the first unit body 101 from the second position to the first position toward the stack unit 220. Here, the suction function of the holding unit 230 may be in a state where its operation is started, and the lower surface of the holding unit 230 and the upper surface of the first unit body 101 may be in a state attached to each other.

In the step (S1300), the holding unit 230 may fold the electrode assembly 100 through a swing motion. The holding unit 230 may fold the electrode assembly 100 so that the first unit body 101 overlaps with the adjacent second unit body 102 through a swinging motion. The holding unit 230 allows a lower surface of the first unit body 101 to correspond to a lower surface of the second unit body 102 adjacent to the first unit body 101, and allows the upper surface of the second unit body 102 to correspond to the upper surface of the existing stack 190. The holding unit 230 can rotate in a counterclockwise direction around the y-axis with respect to the xy plane to lift the first unit body 101, and the holding unit 230 can rotate in a clockwise direction around the y-axis with respect to the xy plane to lower the first unit body 101. Through the swing motion of the holding unit 230, a portion between the second unit body 102 placing on the transfer direction (x-axis direction) of the first unit body 101 and the transferred first unit body 101 is folded to one side p1, and a portion between the second unit body 102 and the existing stack 190 is folded to the other side p2, so that the electrode assembly 100 can be folded in a zigzag shape.

The step (S1300) may be performed simultaneously with the step (S1200). In other words, the holding unit 230 may transfer the first unit body 101 from the second position to the first position while performing a swing motion.

In the step (S1400), the holding unit 230 may stack the first unit body 101 on the stack unit 20. As the holding unit 230 folds the first unit body 101 and stacks it on the stack unit 220, the stack unit 220 may move to a lower side. Here, the lower side may mean a lower side with respect to one surface of the electrode assembly 100 transferred from the supply unit 210. In the stack unit 220, an existing stack 190 that has already been formed may be located. The stack unit 220 may be descended by the height ascended by the transferred first unit body 101. When the upper surface of the existing stack 190 moves to the lower side, the uppermost position of the ascended stack 190 may be adjusted to the original position before the first unit body 101 is stacked.

At this time, the position information acquired by the detection unit 240 can be used to stack the first unit bodies 101 side by side on the existing stack 190. The stack unit 220 can adjust the position based on the position information acquired by the detection unit 240 and may allow the first unit body 101 to be stacked side by side on the existing stack 190. In this manner, the stack unit 220 not only moves up and down on the z-axis, but also can move in the x-axis or the y-axis based on the (x,y,θ) values obtained by the detection unit 240, and also may rotate on the xy plane.

In such a case, the electrode assembly stacking method (S1000) of the present embodiment may include a step (S1390) of adjusting the position of the stack unit 220 using the position information received from the detection unit 240. Further, before the step of adjusting the position of the stack unit 220, a step of comparing position information of the first unit body 101 and the stack unit 220 may be included.

Here, the above step (S1390) may be performed before the step (S1400), i.e., before the stack unit 220 moves to the lower side, or may be performed simultaneously with the step (S1400), i.e., while the stack unit 220 moves to the lower side.

Here, the position information received from the detection unit 240 may include position information detected by the second detection unit 240b.

Specifically, after holding the holding unit 230 at the second position, the second detection unit 240b may detect position information of the held first unit body 101, and may transmit the information to the stack unit 220. The stack unit 220 may adjust the position of the stack unit 220 based on the position information of the first unit body 101.

Therefore, as described above, before the step (S1390), a step where the second detection unit 240b detects the position information of the holding unit 230 or the held first unit body 101, and a step of transmitting the position information detected by the second detection unit 240 to the stack unit 220 may be performed.

Further, the position information received from the detection unit 240 may include the position information detected by the first detection unit 240a.

Further, the first detection unit 240a may detect the current position of the stack unit 220 or the position of the first unit body 101 before the first unit body 101 moved from the first position is stacked, and may transmit it to the stack unit 220. The stack unit 220 may adjust the position of the stack unit 220 based on such a position information.

Therefore, before the step (S1390), a step where the first detection unit 240a detects the position information of the first unit body 101 or the stack unit 220, and a step where the first detection unit 240a transfers the detected position information to the stack unit 220 can be performed.

Further, in the step (S1400), the transferred first unit body 101 may be seated on the stack unit 220. The first unit body 101 may be stacked on the existing stack 190 of the stack unit 220. Accordingly, on the upper surface of the existing stack 190, the second unit body 102 and the transferred first unit body 101 located at the farther side in the transfer direction (x-axis direction) of the first unit body 101 can be stacked.

Meanwhile, the detection unit 240, specifically, the first detection unit 240a may be used to confirm whether the stacked first unit body 101 is stacked side by side with the existing stack 190. If the first unit bodies 101 are not stacked side by side, the corresponding stack 190 may be determined to be defective and discharged to the outside of the process.

Therefore, the electrode assembly folding method (S1000) of the present embodiment may, after the step (S1400), further include a step where the detection unit 240 confirms whether the first unit body 101 and the existing stack 190 correspond to each other (S1500). Here, the above step may be performed by the first detection unit 240a.

Therefore, a step where the detection unit 240 confirms whether the first unit body 101 corresponds to the existing stack 190 (S1500) can be embodied into a step where the first detection unit 240a detects the position of the stacked first unit body 101, the stack 190, or the stack unit 220, a step of comparing the position information of the first unit body 101 and the stack 190, and a step where it is determined to be defective if the first unit body 101 does not correspond to the existing stack 190.

After the above steps, the holding unit 230 may ascend to wait for the next operation, or may move in the opposite direction to the transfer direction to transfer the first unit body 101. Further, when the above steps are performed by the first holding unit 230a, after the above steps, the step (S1100) by the second holding unit 230b can be performed again.

By repeating the above steps, the first unit body 101 and the second unit body 102 can be continuously stacked on the stack unit 220, and the stacking height of the stack 190 may be increased. The stack 190 formed through the above steps can be stacked quickly and accurately by stacking in a zigzag stacking method in a horizontal direction. In addition, the stack 190 formed through the above steps can minimize the damage by performing the movement of the electrode by a suction device using a suction method.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

110: first electrode
120: second electrode
130: separator
190: stack
200: electrode assembly folding apparatus
210: supply unit
220: stack unit
230: holding unit
232: moving unit
234: suction unit
235: suction line
236: suction hole
237: block
238: block connection hole
239: block suction hole
240: detection unit

## Claims

1. An electrode assembly folding apparatus (200) for folding an electrode assembly (100) in a zigzag shape, the apparatus (200) comprising:
a supply unit (210) for supplying the electrode assembly (100) that comprises two sheet-shape separators (130), a second electrode (120) continuously located between inside surfaces of the separators (130) facing each other, and a first electrode (110) alternately located up and down on outside surfaces of the two separators (130), wherein a first unit body (101) and a second unit body (102) are alternately connected to each other, and wherein the first electrode (110) of the first unit body (101) is located at an upper side and the first electrode (110) of the second unit body (102) is located at a lower side,
the apparatus (200) being **characterized by** further comprising:
a holding unit (230) that holds the first unit body (101) supplied from the supply unit (210) and transfers it through a swing motion, thereby folding the electrode assembly (100) in a zigzag shape, and
a stack unit (220)
that stacks the first unit body (101) transferred by the holding unit (230).

2. The electrode assembly folding apparatus (200) according to claim 1, wherein:
the holding unit (230) seats the transferred first unit body (101) on the stack unit (220), then ascends and moves toward the supply unit (210), and then descends to a position where it holds a subsequent first unit body (101).

3. The electrode assembly folding apparatus (200) according to claim 1, wherein:
the swing motion is a motion in which the holding unit (230) rotates in one direction so that one end facing the stack unit (220)
among both ends of the first unit body (101) ascends and moves toward the stack unit (220), and then the holding unit (230) rotates in a direction opposite to the one direction, so that the other end of both ends of the first unit body (101) descends and moves toward the stack unit (220).

4. The electrode assembly folding apparatus (200) according to claim 1, wherein:
the holding unit (230) moves from the supply unit (210) toward the stack unit (220) through the swinging motion between a first position and a second position,
the first position is a position where the first unit body (101) is stacked on the stack unit (220), and
the second position is a position where the holding unit (230) holds the first unit body (101) supplied from the supply unit (210).

5. The electrode assembly folding apparatus (200) according to claim 3, wherein:
(i) In a case that the supply unit (210) is located on a left side and the stack unit (220) is located on a right side, the one direction is a counterclockwise direction, and the direction opposite to the one direction is a clockwise direction, and
(ii) In a case that the supply unit (210) is located on a right side and the stack unit (220) is located on a left side, the one direction is a clockwise direction, and the direction opposite to the one direction is a counterclockwise direction.

6. The electrode assembly folding apparatus (200) according to claim 1, wherein:
the holding unit (230) comprises a first holding unit (230a) that transfers the k-th first unit body and a second holding unit (230b) that transfers the k+1 th first unit body,
the k-th first unit body is stacked on the stack unit (220), and then the second holding unit holds the k+1-th first unit body, and k is a natural number.

7. The electrode assembly folding apparatus (200) according to claim 1, wherein:
the holding unit (230) is attached to an upper surface of the first electrode (110) of the first unit body (101).

8. The electrode assembly folding apparatus (200) according to claim 1, wherein:
the holding unit (230) is a suction device using a gas suction method.

9. The electrode assembly folding apparatus (200) according to claim 1, wherein:
as the first unit body (101) or the second unit body (102) is stacked on the stack unit (220),
the stack unit (220) is gradually descended by a height of the stacked first unit body (101) or second unit body (102).

10. The electrode assembly folding apparatus (200) according to claim 1, comprising:
a detection unit (240) for detecting the position of the first unit body (101).

11. The electrode assembly folding apparatus (200) according to claim 10, wherein:
based on the position information of the first unit body (101) detected by the detection unit (240):
at least one of the stack unit (220)
and the first unit body (101) moves or rotates in a transfer direction of the electrode assembly (100) or in a width direction of the electrode assembly (100), whereby the stack unit (220) and the first unit body (101) are aligned with each other, or
at least one of the holding unit (230) and the first unit body (101) moves or rotates in a transfer direction of the electrode assembly (100) or in a width direction of the electrode assembly (100), whereby the holding unit (230) and the first unit body (101) are aligned with each other.

12. The electrode assembly folding apparatus (200) according to claim 10, wherein:
the detection unit (240) comprises a first detection unit and a second detection unit,
the first detection unit is located above a first position,
the second detection unit is located above a second position,
the first position is a position where the first unit body (101) is stacked in the stack unit (220), and
the second position is a position where the holding unit (230) holds the first unit body (101).

13. An electrode assembly folding method for folding an electrode assembly (100) in a zigzag shape, the method comprising:
supplying the electrode assembly (100) at a supply unit (210), wherein the electrode assembly (100) comprises two sheet-shape separators (130), a second electrode (120) continuously located between inside surfaces of the separators (130) facing each other, and a first electrode (110) alternately located up and down on outside surfaces of the two separators (130), and wherein a first unit body (101) and a second unit body (102) are alternately connected to each other, and wherein the first electrode (110) of the first unit body (101) is located at an upper side and the first electrode (110) of the second unit body (102) is located at a lower side,
the method being **characterized by** further comprising:
holding the first unit body (101) supplied from the supply unit (210) and transferring it through a swing motion, thereby folding the electrode assembly (100) in a zigzag shape, and
stacking the first unit body (101) transferred by a holding unit (230), on a stack unit (220),
wherein the holding unit (230) seats the transferred first unit body (101) on the stack unit (220),
then ascends and moves toward the supply unit (210), and then descends to a position where it holds a subsequent first unit body (101).

14. The electrode assembly folding method according to claim 13, wherein:
the holding unit (230) comprises a first holding unit (230a) that transfers the k-th first unit body and a second holding unit (230b) that transfers the k+1 th first unit body,
the k-th first unit body is stacked on the stack unit (220), and then the second holding unit holds the k+1-th first unit body, and
k is a natural number.

15. The electrode assembly folding method according to claim 13, wherein:
the stack unit (220)
moves to a lower side so that the transferred first unit body (101) is stacked on the existing stack.

16. The electrode assembly folding method according to claim 13, wherein:
before the step of stacking the first unit body (101), the method further comprises:
detecting position information of the first unit body (101) by a detection unit (240); and adjusting the position of the stack unit (220)
or the holding unit (230) based on the position information of the first unit body (101) by the detection unit (240).

## Patentansprüche

1. Elektrodenanordnung-Faltvorrichtung (200) zum Falten einer Elektrodenanordnung (100) in eine zickzack Form, die Vorrichtung (200) umfassend:
eine Zuführeinheit (210) zum Zuführen der Elektrodenanordnung (100), welche zwei blattförmige Separatoren (130), eine zweite Elektrode (120), welche kontinuierlich zwischen Innenflächen der Separatoren (130) angeordnet ist, welche einander zugewandt sind, und eine erste Elektrode (110) umfasst, welche alternierend an Außenflächen der zwei Separatoren (130) oben und unten angeordnet ist, wobei ein erster Einheitskörper (101) und ein zweiter Einheitskörper (102) alternierend miteinander verbunden sind, und wobei die erste Elektrode (110) des ersten Einheitskörpers (101) an einer oberen Seite angeordnet ist und die erste Elektrode (110) des zweiten Einheitskörpers (102) an einer unteren Seite angeordnet ist,
wobei die Vorrichtung (200) **dadurch gekennzeichnet ist, dass** sie ferner umfasst:
eine Halteeinheit (230), welche den ersten Einheitskörper (101) hält, welcher von der Zuführeinheit (210) zugeführt wird, und ihn durch eine Schwingbewegung transferiert, wodurch die Elektrodenanordnung (100) in eine zickzack Form gefaltet wird, und
eine Stapeleinheit (220), welche den ersten Einheitskörper (101) stapelt, welcher durch die Halteeinheit (230) transferiert ist.

2. Elektrodenanordnung-Faltvorrichtung (200) nach Anspruch1, wobei:
die Halteeinheit (230) den transferierten ersten Einheitskörper (101) auf die Stapeleinheit (220) setzt, dann aufsteigt und sich zu der Zuführeinheit (210) bewegt, und dann zu einer Position absteigt, an welcher sie einen nachfolgenden ersten Einheitskörper (101) hält.

3. Elektrodenanordnung-Faltvorrichtung (200) nach Anspruch 1, wobei:
die Schwingbewegung eine Bewegung ist, in welcher die Halteeinheit (230) in einer Richtung rotiert, sodass ein Ende, welches der Stapeleinheit (220) zugewandt ist, unter beiden Enden des ersten Einheitskörpers (101) aufsteigt und sich zu der Stapeleinheit (220) bewegt, und dann die Halteeinheit (230) in einer Richtung rotiert, welche entgegengesetzt zu der einen Richtung ist, sodass das andere Ende von beiden Enden des ersten Einheitskörpers (101) absteigt und sich zu der Stapeleinheit (220) bewegt.

4. Elektrodenanordnung-Faltvorrichtung (200) nach Anspruch 1, wobei:
die Halteeinheit (230) sich von der Zuführeinheit (210) zu der Stapeleinheit (220) durch die Schwingbewegung zwischen einer ersten Position und einer zweiten Position bewegt,
wobei die erste Position eine Position ist, an welcher der erste Einheitskörper (101) an der Stapeleinheit (220) gestapelt ist, und
die zweite Position eine Position ist, an welcher die Halteeinheit (230) den ersten Einheitskörper (101) hält, welcher von der Zuführeinheit (210) zugeführt ist.

5. Elektrodenanordnung-Faltvorrichtung (200) nach Anspruch 3, wobei:
(i) in einem Fall, in welchem die Zuführeinheit (210) an einer linken Seite angeordnet ist und die Stapeleinheit (220) an einer rechten Seite angeordnet ist, die eine Richtung eine Gegenuhrzeigersinnrichtung ist, und die Richtung, welche entgegengesetzt zu der einen Richtung ist, eine Uhrzeigersinnrichtung ist, und
(ii) in einem Fall, in welchem die Zuführeinheit (210) an einer rechten Seite angeordnet ist und die Stapeleinheit (220) an einer linken Seite angeordnet ist, die eine Richtung eine Uhrzeigersinnrichtung ist, und die Richtung, welche entgegengesetzt zu der einen Richtung ist, eine Gegenuhrzeigersinnrichtung ist.

6. Elektrodenanordnung-Faltvorrichtung (200) nach Anspruch 1, wobei:
die Halteeinheit (230) eine erste Halteeinheit (230a), welche den k-ten ersten Einheitskörper transferiert, und eine zweite Halteeinheit (230b) umfasst, welche den k+1ten ersten Einheitskörper transferiert,
wobei der k-te erste Einheitskörper an der Stapeleinheit (220) gestapelt ist, und dann die zweite Halteeinheit den k+1ten ersten Einheitskörper hält, und
wobei k eine natürliche Zahl ist.

7. Elektrodenanordnung-Faltvorrichtung (200) nach Anspruch 1, wobei:
die Halteeinheit (230) an einer unteren Fläche der ersten Elektrode (110) des ersten Einheitskörpers (101) angebracht ist.

8. Elektrodenanordnung-Faltvorrichtung (200) nach Anspruch 1, wobei:
die Halteeinheit (230) eine Saugvorrichtung ist, welche ein Gassaugverfahren verwendet.

9. Elektrodenanordnung-Faltvorrichtung (200) nach Anspruch 1, wobei:
wenn der erste Einheitskörper (101) oder der zweite Einheitskörper (102) an der Stapeleinheit (220) gestapelt ist, die Stapeleinheit (220) schrittweise um eine Höhe des gestapelten ersten Einheitskörpers (101) oder zweiten Einheitskörpers (102) abgestiegen wird.

10. Elektrodenanordnung-Faltvorrichtung (200) nach Anspruch 1, umfassend:
eine Detektionseinheit (240) zum Detektieren der Position des ersten Einheitskörpers (101).

11. Elektrodenanordnung-Faltvorrichtung (200) nach Anspruch 10, wobei:
auf Basis der Positionsinformationen des ersten Einheitskörpers (101), welche durch die Detektionseinheit (240) detektiert sind, sich wenigstens eines aus der Stapeleinheit (220) und dem ersten Einheitskörper (101) in einer Transferrichtung der Elektrodenanordnung (100) oder in einer Breitenrichtung der Elektrodenanordnung (100) bewegt oder rotiert, wobei die Stapeleinheit (220) und der erste Einheitskörper (101) miteinander ausgerichtet sind, oder
sich wenigstens eines aus der Halteeinheit (230) und dem ersten Einheitskörper (101) in einer Transferrichtung der Elektrodenanordnung (100) oder in einer Breitenrichtung der Elektrodenanordnung (100) bewegt oder rotiert, wobei die Halteeinheit (230) und der erste Einheitskörper (101) miteinander ausgerichtet sind.

12. Elektrodenanordnung-Faltvorrichtung (200) nach Anspruch 10, wobei:
die Detektionseinheit (240) eine erste Detektionseinheit und eine zweite Detektionseinheit umfasst,
wobei die erste Detektionseinheit über einer ersten Position angeordnet ist,
die zweite Detektionseinheit über einer zweiten Position angeordnet ist,
die erste Position eine Position ist, in welcher der erste Einheitskörper (101) in der Stapeleinheit (220) gestapelt ist, und
die zweite Position eine Position ist, in welcher die Halteeinheit (230) den ersten Einheitskörper (101) hält.

13. Elektrodenanordnung-Faltverfahren zum Falten einer Elektrodenanordnung (100) in eine zickzack Form, das Verfahren umfassend:
Zuführen der Elektrodenanordnung (100) an einer Zuführeinheit (210), wobei die Elektrodenanordnung (100) zwei blattförmige Separatoren (130), eine zweite Elektrode (120), welche kontinuierlich zwischen Innenflächen der Separatoren (130) angeordnet ist, welche einander zugewandt sind, und eine erste Elektrode (110) umfasst, welche alternierend an Außenflächen der zwei Separatoren (130) oben und unten angeordnet ist, wobei ein erster Einheitskörper (101) und ein zweiter Einheitskörper (102) alternierend miteinander verbunden sind, und wobei die erste Elektrode (110) des ersten Einheitskörpers (101) an einer oberen Seite angeordnet ist und die erste Elektrode des zweiten Einheitskörpers (102) an einer unteren Seite angeordnet ist,
wobei das Verfahren **dadurch gekennzeichnet ist, dass** es ferner umfasst:
Halten des ersten Einheitskörpers (101), welcher von der Zuführeinheit (210) zugeführt wird, und Transferieren davon durch eine Schwingbewegung, wodurch die Elektrodenanordnung (100) in eine zickzack Form gefaltet wird, und
Stapeln des ersten Einheitskörpers (101), welcher durch eine Halteeinheit (230) transferiert wird, an einer Stapeleinheit (220), wobei die Halteeinheit (230) den transferierten ersten Einheitskörper (101) auf die Stapeleinheit (220) setzt, dann aufsteigt und sich zu der Zuführeinheit (210) bewegt, und dann zu einer Position absteigt, an welcher sie einen nachfolgenden ersten Einheitskörper (101) hält.

14. Elektrodenanordnung-Faltverfahren nach Anspruch 13, wobei:
die Halteeinheit (230) eine erste Halteeinheit (230a), welche den k-ten ersten Einheitskörper transferiert, und eine zweite Halteeinheit (230b) umfasst, welche den k+1ten ersten Einheitskörper transferiert,
wobei der k-te erste Einheitskörper an der Stapeleinheit (220) gestapelt wird, und dann die zweite Halteeinheit den k+1ten ersten Einheitskörper hält, und
wobei k eine natürliche Zahl ist.

15. Elektrodenanordnung-Faltverfahren nach Anspruch 13, wobei:
sich die Stapeleinheit (220) zu einer unteren Seite bewegt, sodass der transferierte erste Einheitskörper (101) an dem existierenden Stapel gestapelt wird.

16. Elektrodenanordnung-Faltverfahren nach Anspruch 13, wobei:
vor dem Schritt des Stapelns des ersten Einheitskörpers (101), das Verfahren ferner umfasst:
Detektieren von Positionsinformationen des ersten Einheitskörpers (101) durch eine Detektionseinheit (240); und
Anpassen der Position der Stapeleinheit (220) oder der Halteeinheit (230) auf Grundlage der Positionsinformationen des ersten Einheitskörpers (101) durch die Detektionseinheit (240).

## Revendications

1. Appareil de pliage d'ensemble d'électrodes (200) pour plier un ensemble d'électrodes (100) en forme de zigzag, l'appareil (200) comprenant :
une unité d'alimentation (210) pour fournir l'ensemble d'électrodes (100) qui comprend deux séparateurs en forme de feuille (130), une deuxième électrode (120) située en continu entre des surfaces intérieures des séparateurs (130) se faisant face, et
une première électrode (110) située alternativement en haut et en bas sur des surfaces extérieures des deux séparateurs (130), dans lequel un premier corps d'unité (101) et
un deuxième corps d'unité (102) sont alternativement reliés l'un à l'autre, et dans lequel la première électrode (110) du premier corps d'unité (101) est située sur un côté supérieur et la première électrode (110) du deuxième corps d'unité (102) est située sur un côté inférieur,
l'appareil (200) étant **caractérisé en ce qu'**il comprend en outre :
une unité de maintien (230) qui maintient le premier corps d'unité (101) fourni par l'unité d'alimentation (210) et le transfère par un mouvement de balancier, pliant ainsi l'ensemble d'électrodes (100) en forme de zigzag, et
une unité d'empilage (220) qui empile le premier corps d'unité (101) transféré par l'unité de maintien (230).

2. Appareil de pliage d'ensemble d'électrodes (200) selon la revendication 1, dans lequel :
l'unité de maintien (230) place le premier corps d'unité (101) transféré sur l'unité d'empilage (220), puis monte et se déplace vers l'unité d'alimentation (210), puis descend jusqu'à une position où elle maintient un premier corps d'unité (101) suivant.

3. Appareil de pliage d'ensemble d'électrodes (200) selon la revendication 1, dans lequel :
le mouvement de balancier est un mouvement dans lequel l'unité de maintien (230) tourne dans une première direction de sorte qu'une extrémité faisant face à l'unité d'empilage (200) entre les deux extrémités du premier corps d'unité (101) monte et se déplace vers l'unité d'empilage (220), puis l'unité de maintien (230) tourne dans une direction opposée à la première direction, de sorte que l'autre extrémité des deux extrémités du premier corps d'unité (101) descende et se déplace vers l'unité d'empilage (220).

4. Appareil de pliage d'ensemble d'électrodes (200) selon la revendication **1,** dans lequel :
l'unité de maintien (230) se déplace depuis l'unité d'alimentation (210) vers l'unité d'empilage (220) sous l'effet du mouvement de balancier entre une première position et une deuxième position,
la première position est une position où le premier corps d'unité (101) est empilé sur l'unité d'empilage (220), et
la deuxième position est une position où l'unité de maintien (230) maintient le premier corps d'unité (101) fourni par l'unité d'alimentation (210).

5. Appareil de pliage d'ensemble d'électrodes (200) selon la revendication 3, dans lequel :
(i) Dans un cas où l'unité d'alimentation (210) est située sur un côté gauche et l'unité d'empilage (220) est située sur un côté droit, la première direction est une direction antihoraire, et la direction opposée à la première direction est une direction horaire, et
(ii) Dans un cas où l'unité d'alimentation (210) est située sur un côté droit et l'unité d'empilage (220) est située sur un côté gauche, la première direction est une direction horaire, et la direction opposée à la première direction est une direction antihoraire.

6. Appareil de pliage d'ensemble d'électrodes (200) selon la revendication **1,** dans lequel :
l'unité de maintien (230) comprend une première unité de maintien (230a) qui transfère le k-ième premier corps d'unité et une deuxième unité de maintien (230b) qui transfère le k+1-ième premier corps d'unité,
le k-ième premier corps d'unité est empilé sur l'unité d'empilage (200), puis la deuxième unité de maintien maintient le k+1-ième premier corps d'unité, et
k est un nombre naturel.

7. Appareil de pliage d'ensemble d'électrodes (200) selon la revendication 1, dans lequel :
l'unité de maintien (230) est fixée à une surface supérieure de la première électrode (110) du premier corps d'unité (101).

8. Appareil de pliage d'ensemble d'électrodes (200) selon la revendication **1,** dans lequel :
l'unité de maintien (230) est un dispositif d'aspiration utilisant un procédé d'aspiration de gaz.

9. Appareil de pliage d'ensemble d'électrodes (200) selon la revendication 1, dans lequel :
lorsque le premier corps d'unité (101) ou le deuxième corps d'unité (102) est empilé sur l'unité d'empilage (220), l'unité d'empilage (220) est descendue progressivement d'une hauteur du premier corps d'unité (101) ou du deuxième corps d'unité (102) empilé.

10. Appareil de pliage d'ensemble d'électrodes (200) selon la revendication 1, comprenant :
une unité de détection (240) pour détecter la position du premier corps d'unité (101).

11. Appareil de pliage d'ensemble d'électrodes (200) selon la revendication 10, dans lequel :
sur la base des informations de position du premier corps d'unité (101) détectées par l'unité de détection (240) :
au moins l'un de l'unité d'empilage (220) et du premier corps d'unité (101) se déplace ou tourne dans une direction de transfert de l'ensemble d'électrodes (100) ou dans une direction de largeur de l'ensemble d'électrodes (100), l'unité d'empilage (220) et le premier corps d'unité (101) étant alignés l'un avec l'autre, ou
au moins l'un de l'unité de maintien (230) et du premier corps d'unité (101) se déplace ou tourne dans une direction de transfert de l'ensemble d'électrodes (100) ou dans une direction de largeur de l'ensemble d'électrodes (100), l'unité de maintien (230) et le premier corps d'unité (101) étant alignés l'un avec l'autre.

12. Appareil de pliage d'ensemble d'électrodes (200) selon la revendication 10, dans lequel :
l'unité de détection (240) comprend une première unité de détection et une deuxième unité de détection,
la première unité de détection est située au-dessus d'une première position,
la deuxième unité de détection est située au-dessus d'une deuxième position,
la première position est une position où le premier corps d'unité (101) est empilé dans l'unité d'empilage (220), et
la deuxième position est une position où l'unité de maintien (230) maintient le premier corps d'unité (101).

13. Procédé de pliage d'ensemble d'électrodes pour plier un ensemble d'électrodes (100) en forme de zigzag, le procédé comprenant :
la fourniture de l'ensemble d'électrodes (100) au niveau d'une unité d'alimentation (210), dans lequel l'ensemble d'électrodes (100) comprend deux séparateurs en forme de feuille (130), une deuxième électrode (120) située en continu entre des surfaces intérieures des séparateurs (130) se faisant face, et une première électrode (110) située alternativement en haut et en bas sur des surfaces extérieures des deux séparateurs (130), et dans lequel un premier corps d'unité (101) et un deuxième corps d'unité (102) sont alternativement reliés l'un à l'autre, et dans lequel la première électrode (110) du premier corps d'unité (101) est située sur un côté supérieur et la première électrode (110) du deuxième corps d'unité (102) est située sur un côté inférieur,
le procédé étant **caractérisé en ce qu'**il comprend en outre :
le maintien du premier corps d'unité (101) fourni par l'unité d'alimentation (210) et
son transfert par un mouvement de balancier, pliant ainsi l'ensemble d'électrodes (100) en forme de zigzag, et
l'empilage du premier corps d'unité (101) transféré par une unité de maintien (230), sur une unité d'empilage (220),
dans lequel l'unité de maintien (230) place le premier corps d'unité (101) transféré sur l'unité d'empilage (220), puis monte et se déplace vers l'unité d'alimentation (210), puis descend jusqu'à une position où elle maintient un premier corps d'unité (101) suivant.

14. Procédé de pliage d'ensemble d'électrodes selon la revendication 13, dans lequel :
l'unité de maintien (230) comprend une première unité de maintien (230a) qui transfère le k-ième premier corps d'unité et une deuxième unité de maintien (230b) qui transfère le k+1-ième premier corps d'unité,
le k-ième premier corps d'unité est empilé sur l'unité d'empilage (220), puis la deuxième unité de maintien maintient le k+1-ième premier corps d'unité, et
k est un nombre naturel.

15. Procédé de pliage d'ensemble d'électrodes selon la revendication 13, dans lequel :
l'unité d'empilage (220) se déplace vers un côté inférieur de sorte que le premier corps d'unité (101) transféré soit empilé sur l'empilage existant.

16. Procédé de pliage d'ensemble d'électrodes selon la revendication 13, dans lequel :
avant l'étape d'empilage du premier corps d'unité (101), le procédé comprend en outre :
la détection d'informations de position du premier corps d'unité (101) par une unité de détection (240) ; et
le réglage de la position de l'unité d'empilage (220) ou de l'unité de maintien (230) sur la base des informations de position du premier corps d'unité (101) par l'unité de détection (240).
